# EUROPÄISCHE PATENTANMELDUNG

(11) **EP 3 544 081 A1**
(43) Veröffentlichungstag der Anmeldung: **25.09.2019**
(21) Anmeldenummer: 19000107.3
(22) Anmeldetag: 28.02.2019
(51) Int. Cl.: H01M 2/10, H01M 2/20, H01M 2/30

(54) **ZELLPOL FÜR FAHRZEUGBATTERIEZELLEN**

(30) Priorität: 21.03.2018 DE 102018002333
(71) Anmelder: Voltabox AG, 33129 Delbrück (DE)
(72) Erfinder: Stichling, Jochen, 59269 Beckum (DE); Werth, Constantin, 33106 Paderborn-Wewer (DE)
(74) Vertreter: Lelgemann, Karl-Heinz

(57) **Zusammenfassung**

Ein Zellpol (2) für Fahrzeugbatteriezellen (1), die mittels derartiger Zellpole (2) zu Fahrzeugbatterieanordnungen zusammenfüg- bzw. -stellbar sind, hat einen eingangsseitigen Anschlussabschnitt (3), mittels dem der Zellpol (2) mit seiner Fahrzeugbatteriezelle (1) verbunden ist, und einen ausgangsseitigen Anschlussabschnitt (4), mittels dem der Zellpol (2) bzw. seine Fahrzeugbatteriezelle (1) mit einer benachbarten Fahrzeugbatteriezelle (1) verbindbar, an dem zu diesem Zweck eine stoffliche Verbindung, vorzugsweise eine Schweißnaht (7), ausbildbar und der in einem Winkel, vorzugsweise etwa in einem rechten Winkel, zum eingangsseitigen Anschlussabschnitt (3) des Zellpols (2) angeordnet ist.

Um die stoffliche Verbindung bzw. die Schweißnaht (7) gegen Belastungen zu schützen, wird vorgeschlagen, dass der Zellpol (2) zwischen seinem eingangsseitigen Anschlussabschnitt (3) und seinem ausgangsseitigen Anschlussabschnitt (4) eine mit beiden Anschlussabschnitten (3, 4) einstückige Entlastungskontur (8) aufweist, mittels der die beiden Anschlussabschnitte (3, 4) des Zellpols (2) zueinander versetz- bzw. bewegbar ausgebildet sind.

## Beschreibung

Die Erfindung bezieht sich auf einen Zellpol für Fahrzeugbatteriezellen, die mittels derartiger Zellpole zu Fahrzeugbatterieanordnungen zusammenfüg- bzw. -stellbar sind, mit einem eingangsseitigen Anschlussabschnitt, mittels dem der Zellpol mit seiner Fahrzeugbatteriezelle verbunden ist, und einem ausgangsseitigen Anschlussabschnitt, mittels dem der Zellpol bzw. seine Fahrzeugbatteriezelle mit einer benachbarten Fahrzeugbatteriezelle verbindbar, an dem zu diesem Zweck eine stoffliche Verbindung, vorzugsweise eine Schweißnaht, ausbildbar und der in einem Winkel, vorzugsweise etwa in einem rechten Winkel, zum eingangsseitigen Anschlussabschnitt des Zellpols angeordnet ist.

Derartige Zellpole bzw. die stoffschlüssige Verbindung, mit der sie an dem Anschluss der Fahrzeugbatteriezelle an benachbarte Fahrzeugbatteriezellen dienende Verbindungsglieder angeschlossen sind, sind Belastungen durch Vibrationen ausgesetzt, die dazu führen können, dass ein Ein- bzw. Abreißen der Zellpole an ihren Verbindungsstellen auftritt.

Ausgehend von dem vorstehend geschilderten Stand der Technik liegt der Erfindung die Aufgabe zugrunde, einen Zellpol für Fahrzeugbatteriezellen zur Verfügung zu stellen, mittels dem eine dauerhafte und betriebssichere stoffliche Verbindung an Verbindungs- bzw. Anschlussglieder realisierbar ist, wobei selbst auf die stoffliche Verbindung einwirkende Querlasten ausgleichbar sein sollen und ein Ein- bzw. Abreißen der Zellpole durch Kaltverfestigung verhindert werden soll.

Diese Aufgabe wird erfindungsgemäß dadurch gelöst, dass der Zellpol zwischen seinem eingangsseitigen Anschlussabschnitt und seinem ausgangsseitigen Anschlussabschnitt eine mit beiden Anschlussabschnitten einstückige Entlastungskontur aufweist, mittels der die beiden Anschlussabschnitte des Zellpols zueinander versetzt bzw. bewegbar ausgebildet sind. Vibrationen, die die genannten Belastungen auslösen, werden durch die erfindungsgemäße Entlastungskontur aufgefangen und abgefedert. Sie haben keine bzw. nahezu keine Auswirkungen auf die zwischen dem ausgangsseitigen Anschlussabschnitt des Zellpols einerseits und dem mit dem Zellpol stofflich verbundenen und fest in einer fahrzeugbatteriezellenseitigen Aufnahme befindlichen Bindungsglied andererseits ausgebildeten stofflichen Verbindung, wobei es sich bei dieser stofflichen Verbindung, wie bereits erwähnt, vorteilhaft um eine Schweißnaht handeln kann. Mittels der Entlastungskontur können die beiden Anschlussabschnitte zueinander versetzt bzw. zueinander bewegt werden, ohne dass dies spürbare Auswirkungen auf die stoffliche Verbindung zwischen dem ausgangsseitigen Anschlussabschnitt des Zellpols und dem Verbindungsglied hätte.

Gemäß einer vorteilhaften Weiterbildung des erfindungsgemäßen Zellpols hat dessen Entlastungskontur einen Fortsatzabschnitt des eingangsseitigen Anschlussabschnitts, einen ersten Biegeabschnitt, der sich an den Fortsatzabschnitt anschließt, einen Planarabschnitt, der sich an den ersten Biegeabschnitt anschließt, und einen zweiten Biegeabschnitt, der sich an den Planarabschnitt anschließt und in den ausgangsseitigen Anschlussabschnitt übergeht. Mittels einer derart ausgestalteten Entlastungskontur können Vibrationen und vergleichbare Belastungen in einem hohen Ausmaß ausgeglichen werden, wobei hierdurch verhindert wird, dass diese Vibrationen bzw. Belastungen spürbare Auswirkungen auf die stoffliche Verbindung zwischen dem Zellpol und dem Verbindungsglied haben.

Zweckmäßigerweise ist im Falle der Entlastungskontur des erfindungsgemäßen Zellpols die Krümmung des zweiten Biegeabschnitts zu der des ersten Biegeabschnitts entgegengesetzt.

Gemäß einer vorteilhaften Weiterbildung der Entlastungskontur des erfindungsgemäßen Zellpols ist die Krümmung des ersten Biegeabschnitts größer als 90 Grad und kleiner als 180 Grad.

Zweckmäßigerweise entspricht dann der Betrag der Krümmung des zweiten Biegeabschnitts etwa dem über 90 Grad hinausgehenden Betrag der Krümmung des ersten Biegeabschnitts. Hierdurch lässt sich eine mit einem vergleichsweise geringen Raumbedarf einhergehende Ausgestaltung der Entlastungskontur des erfindungsgemäßen Zellpols realisieren.

Gemäß einem vorteilhaften Ausführungsbeispiel des erfindungsgemäßen Zellpols beläuft sich der Betrag der Krümmung des zweiten Biegeabschnitts auf ca. 60 bis 80, vorzugsweise auf 70 Grad.

Im Folgenden wird die Erfindung anhand einer Ausführungsform unter Bezugnahme auf die Zeichnung näher erläutert.

Es zeigen:
- Figur 1: eine Prinzipdarstellung eines für die Erfindung wesentlichen Teiles einer Fahrzeugbatteriezelle;
- Figur 2: eine vergrößerte Darstellung eines einem Zellpol zugeordneten Bereichs der in Figur 1 teilweise gezeigten Fahrzeugbatteriezelle; und
- Figur 3: eine Prinzipdarstellung mehrerer zusammengefügter Fahrzeugbatteriezellen.

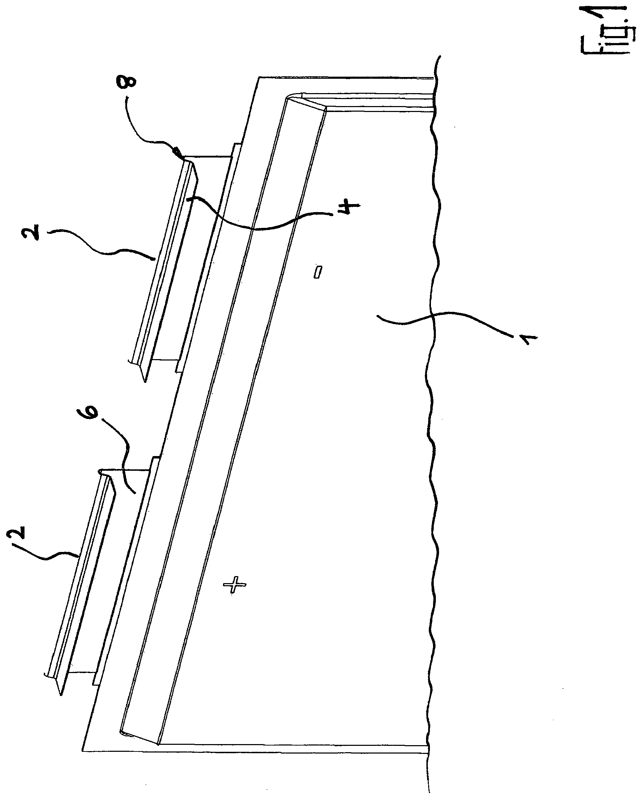

Eine hinsichtlich ihres für die vorliegende Erfindung wesentlichen Bereichs in den Figuren 1 bis 3 gezeigte Fahrzeugbatteriezelle 1 hat Zellpole 2, von denen einer einer Minusseite und einer einer Plusseite der Fahrzeugbatteriezelle 1 zugeordnet ist.

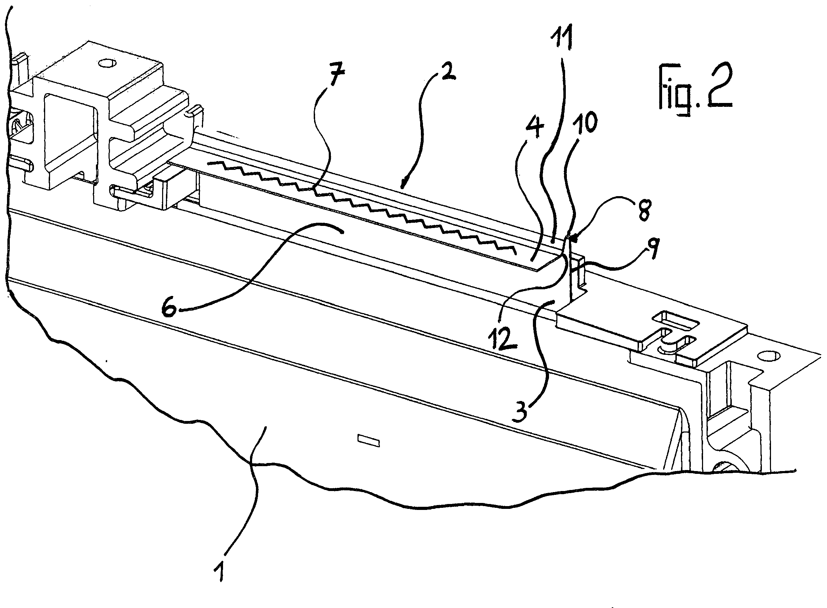

Mittels der Zellpole 2 ist die in den Figuren 1 und 2 teilweise dargestellte Fahrzeugbatteriezelle 1 an gleichartige Fahrzeugbatteriezellen 1 anschließbar und zu eine Vielzahl derartiger Fahrzeugbatteriezellen 1 aufweisenden Fahrzeugbatterieanordnungen zusammenfüg- bzw. -stellbar.

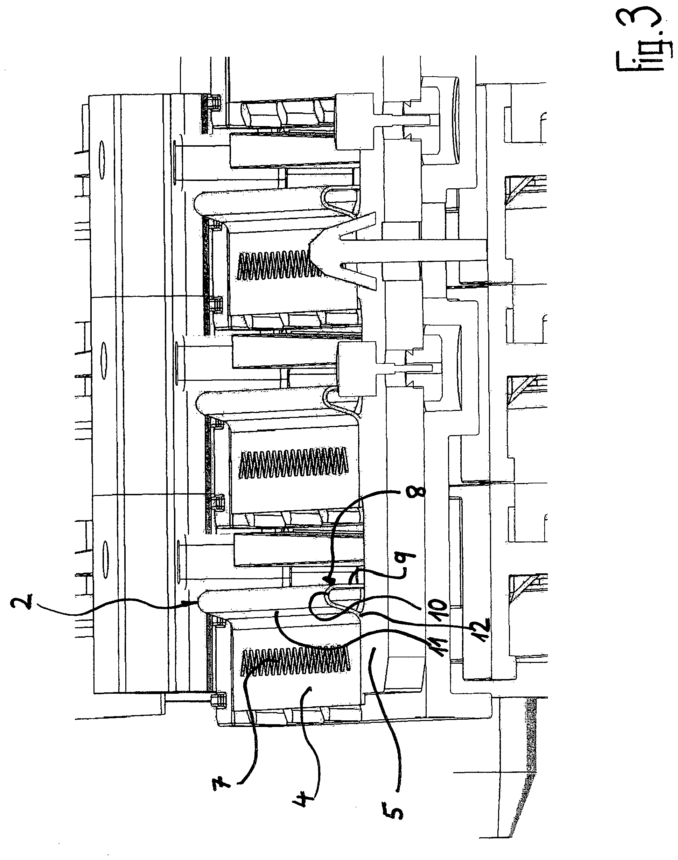

Der Zellpol 2 hat einen eingangsseitigen Anschlussabschnitt 3, mittels dem der Zellpol 2 mit seiner Fahrzeugbatteriezelle 1 verbunden ist. Des Weiteren hat der Zellpol 2 einen ausgangsseitigen Anschlussabschnitt 4, mittels dem der Zellpol 2 bzw. seine Fahrzeugbatteriezelle 1 mit einer benachbarten Fahrzeugbatteriezelle 1 verbindbar ist, wie dies am besten aus Figur 3 hervorgeht. Zum Anschluss zwischen benachbarten Fahrzeugbatteriezellen 1 ist, wie dies ebenfalls in Figur 3 gezeigt ist, ein Verbindungsglied 5, das beispielsweise in Form eines Kupferverbinders ausgestaltet ist, vorgesehen. Das Verbindungsglied 5 wird, wie dies in Figur 3 dargestellt ist, in einen in Figur 2 deutlich dargestellten Aufnahmebereich 6 eingefügt, der an dem in Figur 2 gezeigten Zellpol 2 der Fahrzeugbatteriezelle 1 ausgebildet ist und in den ein entsprechender Teilabschnitt des Verbindungsglieds 5 einschiebbar ist.

Zur festen Anbringung des Verbindungsglieds 5 am Zellpol 2 ist eine stoffliche Verbindung zwischen Zellpol 2 einerseits und Verbindungsglied 5 andererseits vorgesehen, die im Falle der in den Figuren 1 bis 3 gezeigten Ausführungsform des Zellpols 2 als Schweißnaht 7 ausgebildet ist.

Zur dauerhaften und betriebssicheren Ausgestaltung der Schweißnaht 7 zwischen dem Zellpol 2 und dem Verbindungsglied 5 ist zwischen dem eingangsseitigen Anschlussabschnitt 3 und dem ausgangsseitigen Anschlussabschnitt 4 des Zellpols 2 eine Entlastungskontur 8 ausgebildet. Die Entlastungskontur 8 ist einstückig mit sowohl dem eingangsseitigen Anschlussabschnitt 3 als auch dem ausgangsseitigen Anschlussabschnitt 4 des Zellpols 2 ausgestaltet.

Wie sich aus den Figuren 1 bis 3 ergibt, ist der ausgangsseitige Anschlussabschnitt 4 des Zellpols etwa rechtwinklig zum eingangsseitigen Anschlussabschnitt 3 desselben orientiert bzw. angeordnet.

Die Entlastungskontur 8 ist geeignet, selbst unter auf die Verbindung zwischen Zellpol 2 und Verbindungsglied 5 einwirkende Querlasten das nötige Spiel bzw. den nötigen Ausgleich bereitzustellen, um die Schweißnaht 7 zu schützen und ein Ein- bzw. Abreißen der Zellpole 2 durch Kaltverfestigung zu verhindern.

Hierzu weist die Entlastungskontur 8 im in den Figuren 1 bis 3 gezeigten Ausführungsbeispiel einen Fortsatzabschnitt 9 auf, der an seinem fahrzeugbatteriezellenseitigen Ende in den eingangsseitigen Anschlussabschnitt 3 des Zellpols 2 übergeht. An den Fortsatzabschnitt 9 schließt sich an dessen der Fahrzeugbatteriezelle 1 abgewandten Ende ein erster Biegeabschnitt 10 an, dessen Krümmung im in den Figuren 1 bis 3 dargestellten Ausführungsbeispiel ca. 110 Grad beträgt. An den der Fahrzeugbatteriezelle 1 abgewandten ersten Biegeabschnitt 10 der Entlastungskontur 8 schließt sich ein Planarabschnitt 11 an, der an seinem der Fahrzeugbatteriezelle 1 abgewandten Ende in einen zweiten Biegeabschnitt 12 der Entlastungskontur 8 übergeht.

Im dargestellten Ausführungsbeispiel ist die Krümmung des zweiten Biegeabschnitts 12 der Entlastungskontur 8 derjenigen des ersten Biegeabschnitts 10 entgegengesetzt und beträgt ca. 70 Grad. Hieraus ergibt sich eine in etwa rechtwinklige Anordnung des ausgangsseitigen Anschlussabschnitts 4 in Bezug auf den eingangsseitigen Anschlussabschnitt 3 des Zellpols 2.

In den unterhalb des ausgangsseitigen Anschlussabschnitts 4 des Zellpols 2 ausgebildeten Aufnahmebereich 6 ist das Verbindungsglied 5 seitlich einfüg- bzw. einschiebbar. Wenn das Verbindungsglied 5 mit dem dem Zellpol 2 zugeordneten Teilabschnitt unterhalb des ausgangsseitigen Anschlussabschnitts 4 des Zellpols 2 angeordnet ist, kann in einfacher Weise die stoffschlüssige Verbindung bzw. die Schweißnaht 7 erstellt werden, mittels der der Anschluss zwischen dem Zellpol 2 einerseits und dem Verbindungsglied 5 andererseits erstellt bzw. fixiert wird.

## Patentansprüche

1. Zellpol für Fahrzeugbatteriezellen (1), die mittels derartiger Zellpole (2) zu Fahrzeugbatterieanordnungen zusammenfüg- bzw. -stellbar sind, mit einem eingangsseitigen Anschlussabschnitt (3), mittels dem der Zellpol (2) mit seiner. Fahrzeugbatteriezelle (1) verbunden ist, und einem ausgangsseitigen Anschlussabschnitt (4), mittels dem der Zellpol (2) bzw. seine Fahrzeugbatteriezelle (1) mit einer benachbarten Fahrzeugbatteriezelle (1) verbindbar, an dem zu diesem Zweck eine stoffliche Verbindung, vorzugsweise eine Schweißnaht (7), ausbildbar und der in einem Winkel, vorzugsweise etwa in einem rechten Winkel, zum eingangsseitigen Anschlussabschnitt (3) des Zellpols (2) angeordnet ist, **dadurch gekennzeichnet, dass** der Zellpol (2) zwischen seinem eingangsseitigen Anschlussabschnitt (3) und seinem ausgangsseitigen Anschlussabschnitt (4) eine mit beiden Anschlussabschnitten (3, 4) einstückige Entlastungskontur (8) aufweist, mittels der die beiden Anschlussabschnitte (3, 4) des Zellpols (2) zueinander versetz- bzw. bewegbar ausgebildet sind.

2. Zellpol nach Anspruch 1, dessen Entlastungskontur (8) einen Fortsatzabschnitt (9) des eingangsseitigen Anschlussabschnitts (3), einen ersten Biegeabschnitt (10), der sich an den Fortsatzabschnitt (9) anschließt, einen Planarabschnitt (11), der sich an den ersten Biegeabschnitt (10) anschließt, und einen zweiten Biegeabschnitt (12) aufweist, der sich an den Planarabschnitt (11) anschließt und in den ausgangsseitigen Anschlussabschnitt (4) übergeht.

3. Zellpol nach Anspruch 2, bei dessen Entlastungskontur (8) die Krümmung des zweiten Biegeabschnitts (12) zu der des ersten Biegeabschnitts (10) entgegengesetzt ist.

4. Zellpol nach Anspruch 3, bei dessen Entlastungskontur (8) die Krümmung des ersten Biegeabschnitts (10) größer als 90 Grad und kleiner als 180 Grad ist.

5. Zellpol nach Anspruch 4, bei dessen Entlastungskontur (8) der Betrag der Krümmung des zweiten Biegeabschnitts (12) etwa dem über 90 Grad hinausgehenden Betrag der Krümmung des ersten Biegeabschnitts (10) entspricht.

6. Zellpol nach Anspruch 5, bei dessen Entlastungskontur (8) der Betrag der Krümmung des zweiten Biegeabschnitts (12) 60 bis 80 Grad, vorzugsweise 70 Grad, beträgt.
